# DEMANDE DE BREVET EUROPEEN

(11) **EP 2 096 576 A1**
(43) Date de publication de la demande: **02.09.2009**
(21) Numéro de dépôt: 09153401.6
(22) Date de dépôt: 23.02.2009
(51) Int. Cl.: G06K 9/00, G07C 9/00

(54) **Terminal de téléphonie mobile comportant un écran, un organe de saisie de caractères alphanumériques et un capteur d'empreintes digitales**

(30) Priorité: 27.02.2008 FR 0801090
(71) Demandeur: Sagem Wireless, 95801 Cergy Pontoise Cedex (FR)
(72) Inventeur: ROMAO, Fernando, 78100, SAINT GERMAIN EN LAYE (FR)
(74) Mandataire: Maillet, Alain

(57) **Abrégé**

L'emplacement réservé à un capteur d'empreintes digitales sur la face d'un terminal de téléphonie mobile limite la taille de l'écran du fait des dimensions importantes de ce type de capteurs. Le problème se pose donc de concevoir un terminal intégrant un écran spacieux avantageux pour l'utilisation des nouveaux services multimédias associés à la téléphonie tout en conservant une taille globale du terminal aussi réduite que possible ainsi qu'une bonne ergonomie de saisie de caractères alphanumériques, de navigation et d'identification d'un utilisateur. L'invention vise à résoudre ce problème en proposant d'utiliser un capteur d'empreintes digitales aux dimensions réduites et de positionner ce capteur sur l'une des rangées de touches de l'organe de saisie du terminal.

## Description

La présente invention concerne un terminal de téléphonie mobile comportant un écran, un organe de saisie de caractères alphanumériques constitué de touches qui sont réparties sur une face du terminal selon une grille rectangulaire et un capteur d'empreintes digitales,

Les terminaux de téléphonie mobile offrent de plus en plus de services et doivent répondre aujourd'hui à de nombreuses contraintes ergonomiques. Ces contraintes peuvent parfois être contradictoires. D'une part, ces appareils sont destinés à être emportés par leur utilisateur et à l'accompagner dans tous ses déplacements. Cet impératif rend souhaitable d'avoir un terminal de taille et de poids réduit. D'autre part, ces appareils sont utilisés de plus en plus couramment pour l'échange de messages textes, voire l'édition de documents. De plus, ces appareils s'orientent vers une utilisation multimédia comme la visualisation de photos ou de vidéos quand ils n'offrent pas des services télévisuels. Pour ces utilisations, il est avantageux de disposer de moyens de navigation pratiques, à l'ergonomie intuitive, mais également d'un écran de grande taille qui offre une grande résolution. Enfin, ces appareils sont destinés à un usage limité, souvent personnel, d'où la nécessité pour ces appareils d'être équipés de moyens aisés permettant l'identification des utilisateurs à partir de leurs données biométriques.

On constate donc que le terminal idéal serait minuscule et ultraléger tout en étant doté d'un grand écran et de moyens qui permettent une saisie aisée de caractères alphanumériques, une navigation intuitive et une identification de l'utilisateur.

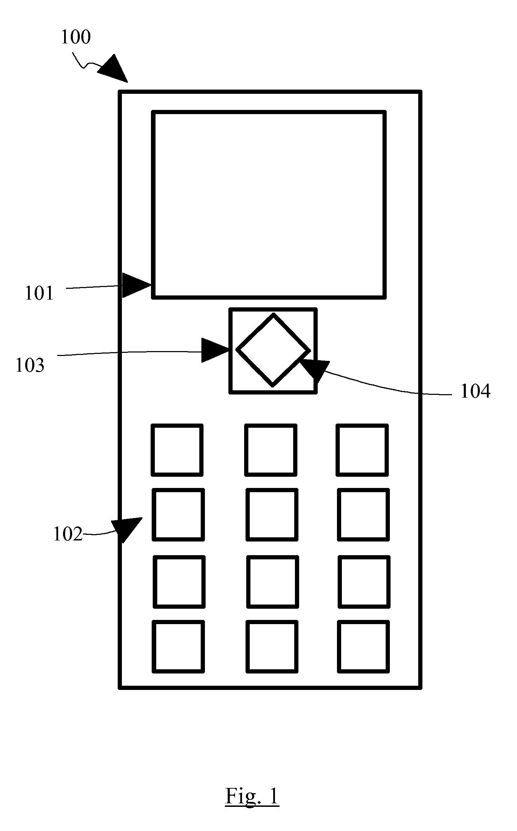

De manière générale, un terminal de téléphonie mobile dispose typiquement de quatre organes principaux qui nous intéressent plus particulièrement pour décrire la présente invention en relation avec la Fig. 1.

Le terminal 100 comporte un organe de visualisation qui comporte un écran 101 permettant d'afficher l'interface homme-machine du terminal.

Le terminal 100 comporte un organe de saisie 102 composé d'un ensemble de touches qui permettent de saisir des caractères alphanumériques et, éventuellement, des touches de prise de ligne. Les touches de cet ensemble sont généralement disposées selon une grille rectangulaire tel que illustré à la Fig. 1.

Le terminal 100 comporte également un organe de navigation. Cet organe de navigation vise à permettre à l'utilisateur de manipuler les contrôles de l'interface utilisateur affichés sur l'écran 101. Cet organe de navigation est typiquement composé d'un dispositif directionnel 103 permettant de diriger un curseur dans les quatre directions (haut, bas, gauche, droite) du plan de l'écran. Dans certains modes de réalisation, tels que celui représenté à la Fig. 1, le dispositif directionnel est une touche physique 103 qui intègre, éventuellement, un bouton central de validation. Dans d'autres modes de réalisation, le bouton de validation est un bouton spécifique séparé du dispositif directionnel 103. La fonction de validation est alors assurée, par exemple, par l'une des touches de prise de ligne du terminal.

L'organe de navigation est aussi habituellement composé de moyens permettant à l'utilisateur d'afficher des options relatives à un menu contextuel, à une icône ou une liste affichée sur l'écran 101 ainsi que d'annuler une option qu'il vient de valider.

La mise en oeuvre de la fonction d'affichage d'option, d'annulation d'une option validée (fonction dite de retour) fait généralement appel à des touches mécaniques de l'organe de saisie qui sont, par exemple, les touches de prise de ligne.

Le terminal 100 comprend également un organe d'identification de l'identité de l'utilisateur. Cet organe d'identification comporte un capteur d'empreintes 104 qui permet l'acquisition d'empreintes digitales et qui est associé à des moyens de reconnaissance d'empreintes digitales pour permettre l'identification de l'utilisateur. Selon le mode de réalisation de la Fig. 1, le capteur d'empreintes digitales 104 est positionné sur la touche physique 103.

Selon des modes de réalisation, le capteur d'empreintes digitales est prévu, en plus de l'acquisition d'empreintes digitales, pour remplir la fonction du dispositif directionnel de l'organe de navigation, y compris la fonction de validation.

Lors de l'utilisation d'un tel terminal, on peut distinguer cinq usages ou modes d'utilisation.

Dans un premier mode que l'on qualifie d'identification, l'utilisateur interagit avec le capteur d'empreintes digitales de l'organe d'identification. Dans ce mode, cet utilisateur pose son doigt sur le capteur d'empreintes digitales 104 et les moyens de reconnaissance d'empreintes digitales de l'organe d'identification comparent l'empreinte du doigt acquise avec une ou chaque empreinte digitale préalablement enregistrée. Si cette empreinte acquise correspond avec l'une de celles enregistrées, le terminal est déverrouillé et l'utilisateur peut alors l'utiliser selon l'un des quatre modes de fonctionnement suivants.

Dans un premier mode de fonctionnement que l'on qualifie de navigation, l'utilisateur interagit avec l'interface de son terminal. Dans ce mode, l'écran affiche des contrôles d'interface tels que des menus, des icônes, des listes. L'utilisateur manipule ces contrôles à l'aide de l'organe de navigation physique. Il peut, par exemple, déplacer un curseur sur une icône, faire apparaître des options contextuelles à l'aide du bouton d'affichage d'options, sélectionner l'une d'entre elles par déplacement du curseur et valider une des options choisies à l'aide du bouton de validation. Il peut également revenir à un menu précédent par action sur le bouton de retour. De cette manière, il peut choisir des applications, des fonctions ou en changer les paramètres de fonctionnement. Dans ce premier mode, l'utilisateur se sert donc de l'organe de navigation et de l'écran de l'organe de visualisation pour commander la navigation.

Dans un second mode de fonctionnement que l'on qualifie de saisie, l'utilisateur est amené à saisir des caractères alphanumériques. Il peut s'agir d'un numéro de téléphone, de texte pour l'envoi de messages courts ou de courriels, de données de son carnet d'adresses ou autre. En particulier pour l'envoi de message, l'utilisateur apprécie de pouvoir saisir le texte rapidement. Dans cette application, l'efficacité d'un clavier physique n'est plus à démontrer, que ce clavier soit un clavier numérique à douze touches ou un clavier alphanumérique complet. Dans ce second mode, l'utilisateur se sert donc de l'organe de saisie et de l'écran de l'organe de visualisation pour commander la saisie.

Dans un troisième mode de fonctionnement que l'on qualifie de multimédia, l'utilisateur utilise son terminal pour restituer du contenu multimédia. Il peut s'agir de photos, de vidéos, de musique. Dans ce mode, il est avantageux de pouvoir utiliser un grand écran, en particulier pour la visualisation de photos ou de vidéos. Les besoins de navigation sont limités. Dans de nombreux cas, une fois lancée l'application de visualisation de contenu, l'utilisateur ne se sert plus que de l'écran pour cette visualisation.

Dans un quatrième mode de fonctionnement que l'on qualifie de téléphonique, l'utilisateur ne se sert ni de l'organe de saisie, ni de l'organe de navigation ni de l'organe de visualisation. Typiquement, dans ce mode, l'utilisateur porte le terminal à son oreille et ne se sert que du micro et du haut-parleur non représentés sur la Fig. 1.

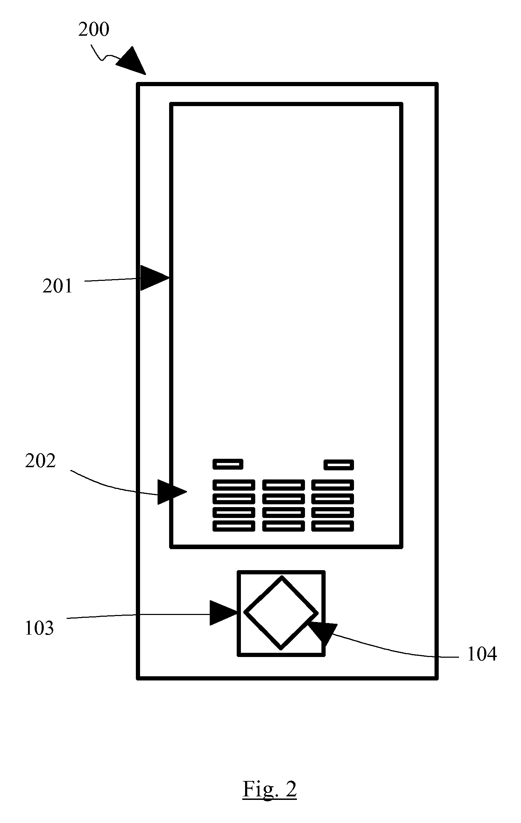

L'apparition récente d'écrans tactiles offre de nouvelles possibilités de conception d'un terminal mobile. Pour répondre au problème de concilier un grand écran et un encombrement réduit, certains terminaux offrent un large écran tactile et un organe de navigation omettant ainsi l'usage d'un organe de saisie physique. Un tel terminal est représenté Fig. 2. On retrouve un terminal 200 ayant globalement le même encombrement que celui représenté Fig. 1.

Ce terminal dispose d'un grand écran tactile 201 et d'un dispositif directionnel, organe similaire à celui du terminal de la Fig. 1. Dans le mode de multimédia, ces terminaux fonctionnent de manière classique et tirent pleinement parti du grand écran. Par contre, dans le mode saisie ou de navigation, la solution adoptée est généralement l'utilisation d'un clavier virtuel 202 à l'aide d'un stylet. Dans le mode navigation, le clavier virtuel 202 est utilisé que ce soit pour afficher une option, en valider une ou revenir à un menu précédent. Il s'avère, à l'usage, que l'utilisation d'un tel clavier virtuel est fastidieuse, les touches sont minuscules ce qui entraîne des erreurs de frappe fréquentes. De plus, le temps nécessaire au système pour détecter et interpréter la saisie d'un caractère à l'aide du stylet interdit une saisie rapide et ralentit la navigation.

Certains terminaux utilisent les fonctionnalités tactiles de l'écran pour changer complètement le mode d'interaction de l'utilisateur avec l'appareil. On passe d'une manipulation des contrôles d'interface par l'intermédiaire d'un curseur animé par l'organe de navigation physique à une manipulation directe des contrôles d'interface affichés sur l'écran tactile à l'aide des doigts et/ou d'un stylet. On parlera alors par la suite d'organe de navigation directe. Ces interfaces sont généralement complexes et déroutantes pour l'utilisateur habitué aux interfaces classiques à l'aide d'un organe de navigation physique.

L'emplacement réservé au capteur d'empreintes digitales sur la face du terminal, même si celui-ci est placé sur une touche pré-existante de l'organe de saisie, en l'occurrence celle du dispositif directionnel 103, limite la taille de l'écran tel que l'on peut le voir sur la Fig. 1 ou 2, du fait de ses dimensions importantes qui sont de l'ordre de 100 à 200 mm².

Le problème se pose donc de concevoir un terminal intégrant un écran spacieux, avantageux pour l'utilisation des nouveaux services multimédias associés à la téléphonie tout en conservant une taille globale du terminal aussi réduite que possible ainsi qu'une bonne ergonomie de saisie de caractères alphanumériques, de navigation et d'identification d'un utilisateur.

L'invention vise à résoudre le problème précédent en proposant d'utiliser un capteur d'empreintes digitales aux dimensions réduites et de positionner ce capteur sur l'une des rangées de touches de l'organe de saisie du terminal.

La présente invention concerne donc un terminal de téléphonie mobile comportant un organe de saisie de caractères alphanumériques constitué d'un ensemble de touches qui sont réparties sur une face du terminal selon une grille rectangulaire et d'un capteur d'empreintes digitales qui est positionné sur l'une des rangées de touches de l'organe de saisie.

Préférentiellement, le capteur d'empreintes digitales est de forme parallélépipédique rectangle dont la largeur et la longueur sont sensiblement celles d'une touche de l'organe de saisie.

La forme parallélépipédique rectangle de dimensions réduites du capteur d'empreintes permet que ce capteur soit de dimensions sensiblement égales à celles des touches de l'organe de saisie, permettant ainsi que ce capteur soit positionné dans une rangée de touches de l'organe de saisie. L'emplacement réservé au capteur d'empreintes digitales est ainsi réduit et permet par conséquent à l'écran d'avoir des dimensions plus importantes.

Selon un mode de réalisation du terminal, l'organe de saisie comportant deux touches de prise de ligne, lesdites touches de prise de ligne sont situées de part et d'autre dudit capteur d'empreintes digitales.

Selon un mode de réalisation, l'écran est au moins partiellement tactile.

Avantageusement, le terminal comporte alors un organe de navigation directe qui est susceptible d'interagir directement avec des contrôles d'interface affichés sur l'écran tactile à l'aide des doigts et/ou d'un stylet. Ledit organe de navigation directe est constitué d'un module d'interface homme-machine, appelé module de navigation, préférentiellement situé en partie basse de l'écran, qui permet l'affichage d'un ensemble de contrôles de navigation sur la partie tactile de l'écran et qui offre les fonctionnalités d'un organe de navigation.

Ce mode de réalisation est avantageux car il limite la fréquence d'utilisation du capteur d'empreintes digitales qui n'est alors utilisé que pour l'identification de l'utilisateur et, profitant de l'écran tactile, évite que des touches mécaniques de l'organe de saisie ne soient dédiées à la navigation.

Avantageusement, ledit ensemble de contrôles comporte une zone de marquage qui offre la fonctionnalité d'un dispositif directionnel permettant le déplacement du curseur selon une des quatre directions du plan de l'écran par déplacement du doigt de l'utilisateur sur cette zone.

Avantageusement, ledit ensemble de contrôles comporte également trois zones de marquage contextuel qui participent, suite à une pression du doigt de l'utilisateur sur l'une d'entre elles, à la mise en oeuvre d'une fonction de validation, de retour et d'affichage d'options contextuelles.

Il est avantageux que la zone de marquage contextuel relative à la fonction de validation soit séparée géographiquement du dispositif directionnel de l'organe de navigation directe afin d'éviter toute mauvaise manipulation de l'utilisateur en train d'utiliser le dispositif directionnel de l'organe de navigation directe et qui validerait involontairement une action par une pression trop forte sur l'écran.

Selon un mode de réalisation, lesdites trois zones de marquage contextuel sont alignées horizontalement et sont situées en dessous de la zone de marquage qui offre la fonctionnalité d'un dispositif directionnel.

Selon un mode particulier de réalisation du terminal, il comporte en outre des moyens de faire disparaître ledit module de navigation lors de l'utilisation de certaines applications et des moyens de faire réapparaître ledit module de navigation lorsque l'utilisateur touche l'écran.

Selon une variante, le module de navigation peut apparaître dès la première mise en service du terminal et disparaître à jamais une fois que l'utilisateur a effectué une phase d'apprentissage.

Il est également avantageux, dans le cas où le terminal comporte un organe de navigation physique, que ce terminal comporte des moyens pour détecter un dysfonctionnement temporaire ou définitif de l'organe de navigation physique et des moyens pour activer l'organe de navigation directe en remplacement dudit organe de navigation physique défectueux.

Selon un mode de réalisation du terminal, le terminal comporte un organe de navigation physique qui préférentiellement utilise le capteur d'empreintes digitales comme dispositif directionnel.

Ce mode de réalisation est particulièrement avantageux car il évite qu'une ou plusieurs touches de l'organe de saisie ne soit dédiées à la navigation sur l'écran.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma d'un terminal de téléphonie mobile selon l'état de la technique.
La Fig. 2 représente un schéma d'un terminal de téléphonie mobile pourvu d'un écran tactile selon l'état de la technique.
La Fig. 3 représente un schéma d'un terminal de téléphonie mobile selon un mode de réalisation de l'invention.
La Fig. 4 représente un schéma d'un terminal de téléphonie mobile selon un autre mode de réalisation de l'invention.

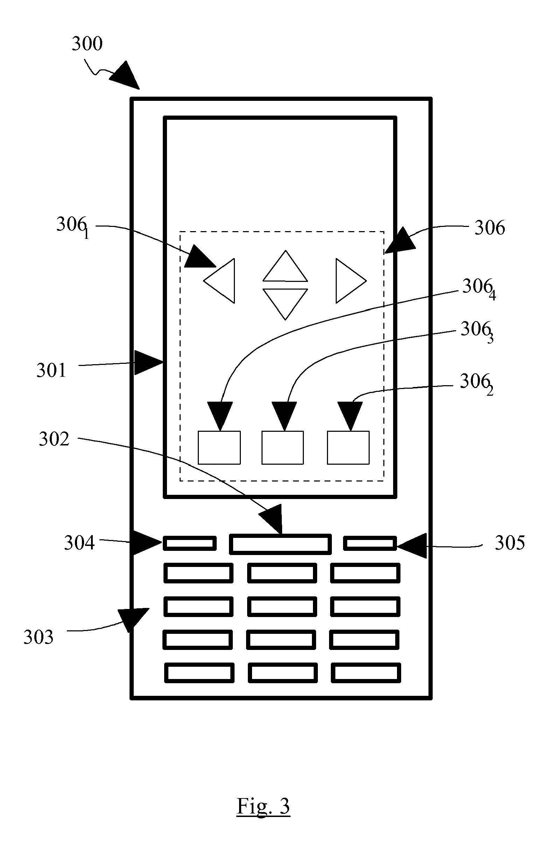

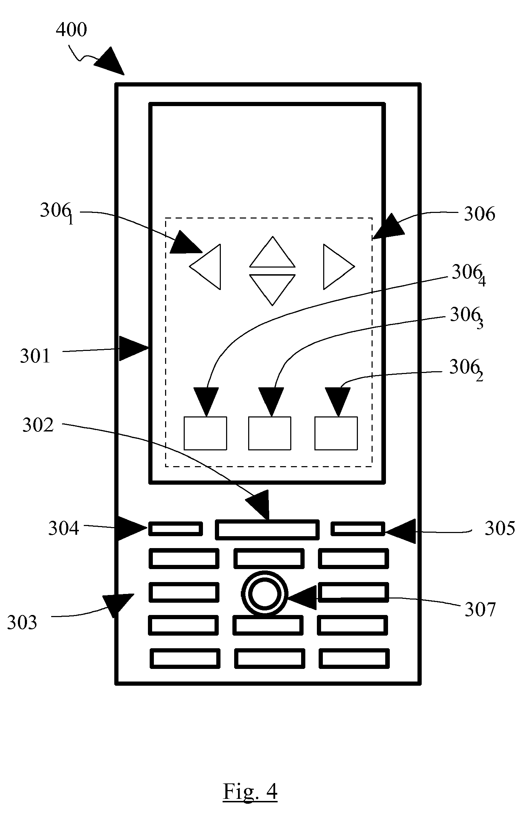

De manière générale, le terminal de téléphonie mobile, selon les modes de réalisation représentés aux Fig. 3 et 4, est constitué d'un seul bloc parallélépipédique appartenant à la famille des terminaux monoblocs (*barphone* en anglais). Mais l'homme du métier comprend que l'invention peut également s'appliquer aux terminaux de la famille de ceux constitués de deux parties, l'une comportant l'écran et l'autre l'organe de saisie, ces deux parties coopérant par l'intermédiaire d'une charnière (*clam* en anglais) ou d'une glissière (*slide* en anglais).

Selon l'invention, le terminal de téléphonie mobile est doté d'un organe de saisie de caractères alphanumériques 303 constitué d'un ensemble de touches qui sont réparties sur une face du terminal selon une grille rectangulaire.

Le terminal 300 est également doté d'un écran 301, d'un capteur d'empreintes digitales 302 de dimensions réduites, préférentiellement de forme parallélépipédique rectangle dont la largeur et la longueur sont sensiblement celles d'une touche de l'organe de saisie, qui est positionné sur l'une des rangées de touches de l'organe de saisie 303.

L'organe de saisie 303 comportant deux touches de prise de ligne référencées 304 et 305, les touches de prise de ligne 304 et 305 sont préférentiellement réparties de part et d'autre du capteur d'empreintes digitales linéaire 302.

La Fig. 3 représente un mode de réalisation du terminal 300.

Selon ce mode de réalisation, le capteur d'empreintes digitales 302 est combiné avec des moyens de reconnaissance d'empreintes digitales (non représentés) afin de mettre en oeuvre le mode d'identification de l'utilisateur.

Selon une variante de ce mode de réalisation, l'écran 301 est tactile. Cet écran tactile est avantageusement entièrement tactile, mais dans certaines variantes, il est au moins partiellement tactile préférentiellement dans sa partie basse.

Le terminal 300 comporte, selon cette variante, un organe de navigation directe, qui est susceptible d'interagir directement avec les contrôles d'interface affichés à l'écran tactile à l'aide des doigts et/ou d'un stylet. L'organe de navigation directe est constitué d'un module d'interface homme-machine, appelé module de navigation, préférentiellement situé en partie basse de l'écran, qui permet l'affichage d'un ensemble de contrôles de navigation 306 sur la partie tactile de l'écran et qui offre les fonctionnalités d'un organe de navigation.

Préférentiellement, cet ensemble de contrôles de navigation 306 comporte une zone de marquage 306₁ qui offre la fonctionnalité d'un dispositif directionnel permettant le déplacement du curseur selon une des quatre directions du plan de l'écran par déplacement du doigt de l'utilisateur sur cette zone.

Avantageusement, cet ensemble de contrôles 306 comporte également trois zones de marquage contextuel 306₂, 306₃ et 306₄ qui participent, suite à une pression du doigt de l'utilisateur sur l'une d'entre elles, à la mise en oeuvre d'une fonction de validation (zone 306₃), de retour (zone 306₂) et d'affichage d'options contextuelles (zone 306₄).

Selon un mode de réalisation, les trois zones 306₂, 306₃ et 306₄ sont alignées horizontalement et sont situées en dessous de la zone de marquage 306₁.

Le module de navigation est donc composé d'un module logiciel de gestion d'interface simulant les touches et le dispositif directionnel du curseur d'un organe de navigation physique. Les contrôles affichés réagissent à l'appui de la même façon que les touches et le dispositif directionnel d'un organe de navigation physique. Les actions ainsi contrôlées peuvent donc être les mêmes que les actions contrôlées par un organe de navigation physique. Il est ainsi possible d'offrir la même expérience utilisateur dans la manipulation de l'interface du terminal d'un tel téléphone en économisant la place nécessaire à l'implantation d'un organe de navigation physique.

Ce mode de réalisation de l'invention permet donc d'offrir à l'utilisateur une expérience optimale quel que soit le mode d'utilisation. Dans le mode de navigation, l'utilisateur retrouve sur le module de navigation l'interface à laquelle il est habitué par les organes de navigation. Dans le cas où l'intégralité de l'écran est tactile, il est possible de coupler la navigation dans l'interface à l'aide du module de navigation par des possibilités de manipulation directe tactile des contrôles de l'interface. Dans le mode de saisie de caractères, l'utilisateur dispose d'un clavier physique bien adapté et permettant une saisie rapide et agréable de numéros et de texte. Dans le mode multimédia, il est possible de faire disparaître le module de navigation pour autoriser un affichage tirant pleinement parti de la totalité de l'écran pour la visualisation de contenus multimédias. Avantageusement, dans ce mode, le module de navigation disparaît et le simple fait de toucher l'écran le fait réapparaître pour permettre le contrôle de l'application de visualisation multimédia.

Le module de navigation peut également apparaître dès la première mise en service du terminal et disparaître à jamais une fois que l'utilisateur a effectué une phase d'apprentissage.

Le mode téléphonique est similaire à celui d'un terminal classique.

La Fig. 4 représente un autre mode de réalisation du terminal de téléphonie mobile.

Le terminal 400 est similaire à celui de la Fig. 3. Il comporte de plus un organe de navigation physique 307 qui utilise, tel que représenté à la Fig. 4, comme dispositif directionnel, une des touches de l'organe de saisie 303. Préférentiellement, l'organe de navigation physique utilise le capteur d'empreintes digitales 302 comme dispositif directionnel. Le capteur d'empreintes digitales 302 est alors associé à des moyens de reconnaissance d'empreintes digitales afin de mettre en oeuvre le mode d'identification.

Le terminal 400 comporte également des moyens pour détecter un dysfonctionnement temporaire ou définitif de l'organe de navigation physique, qui utilise soit une touche de l'organe de saisie 303 soit, préférentiellement le capteur d'empreintes digitales 302, et des moyens pour activer ledit organe de navigation directe en remplacement dudit organe de navigation physique défectueux.

L'invention permet donc l'intégration d'un grand écran dans un terminal mobile d'encombrement classique grâce au positionnement particulier du capteur d'empreintes digitales parmi les touches de l'organe de saisie. Cette intégration ne pénalise pas la navigation qui reste intuitive ni la saisie de caractères alphanumériques ni l'identification d'un utilisateur.

## Revendications

1. Terminal de téléphonie mobile comportant un écran, un organe de saisie de caractères alphanumériques constitué en outre de deux touches de prise de ligne et un capteur d'empreintes digitales, **caractérisé en ce que** lesdites touches de prise de ligne sont réparties de part et d'autre dudit capteur d'empreintes digitales.

2. Terminal selon la revendication 1, **caractérisé en ce que** l'écran est au moins partiellement tactile.

3. Terminal selon la revendication 2, **caractérisé en ce qu'**il comporte un organe dit de navigation directe, qui est susceptible d'interagir directement avec des contrôles d'interface affichés sur l'écran tactile à l'aide des doigts et/ou d'un stylet, ledit organe de navigation directe étant constitué d'un module d'interface homme-machine, appelé module de navigation, qui permet l'affichage d'un ensemble de contrôles de navigation sur la partie tactile de l'écran et qui offre les fonctionnalités d'un organe de navigation.

4. Terminal selon la revendication 3, **caractérisé en ce que** ledit module de navigation est situé dans la partie basse de l'écran.

5. Terminal selon la revendication 3 ou 4, **caractérisé en ce que** ledit ensemble de contrôles comporte une zone de marquage qui offre la fonctionnalité d'un dispositif directionnel permettant le déplacement du curseur selon une des quatre directions du plan de l'écran par déplacement du doigt de l'utilisateur sur cette zone.

6. Terminal selon l'une des revendications 3 à 5, **caractérisé en ce qu'**il comporte également trois zones de marquage contextuel (305₂, 305₃, et 305₄) qui participent, suite à une pression du doigt de l'utilisateur sur l'une d'entre elles, à la mise en oeuvre d'une fonction de validation (305₃), de retour (305₂) et d'affichage d'options contextuelles (305₄).

7. Terminal selon la revendication 6, **caractérisé en ce que** lesdites trois zones de marquage contextuel (305₂, 305₃, et 305₄) sont alignées horizontalement et sont situées en dessous de la zone de marquage (305₁) qui offre la fonctionnalité d'un dispositif directionnel.

8. Terminal selon l'une des revendications 3 à 7, **caractérisé en ce qu'i**l comporte en outre des moyens de faire disparaître ledit module de navigation lors de l'utilisation de certaines applications et des moyens de faire réapparaître ledit module de navigation lorsque l'utilisateur touche l'écran.

9. Terminal selon l'une des revendications 3 à 8, ledit terminal comportant un organe de navigation physique, **caractérisé en ce qu'**il comporte des moyens pour détecter un dysfonctionnement temporaire ou définitif de l'organe de navigation physique et des moyens pour activer ledit organe de navigation directe en remplacement dudit organe de navigation physique défectueux.

10. Terminal selon l'une des revendications 9, ledit terminal comportant un organe de navigation comportant un dispositif directionnel, **caractérisé en ce que** l'organe de navigation physique utilise le capteur d'empreintes digitales comme dispositif directionnel.
